# EUROPEAN PATENT SPECIFICATION

(11) **EP 2 263 778 B1**
(45) Date of publication and mention of the grant of the patent: **23.03.2016**
(21) Application number: 10159529.6
(22) Date of filing: 09.04.2010
(51) Int. Cl.: B01D 53/26

(54) **Apparatus for drying compressed gases**
Vorrichtung zur Trocknung komprimierter Gase
Appareil pour sécher des gaz comprimés

(30) Priority: 19.06.2009 IT PN20090039
(43) Date of publication of application: 22.12.2010
(73) Proprietor: Parker Hannifin Manufacturing S.r.l., 20094 Corsico (MI) (IT)
(72) Inventor: Bellemo, Luciano, 30015, Chioggia (Venezia) (IT)
(74) Representative: Giugni, Valter

(56) References cited:
- EP-A1- 1 994 975
- DE-A1- 3 008 577
- DE-A1- 10 355 927
- US-A- 3 349 570
- US-A- 4 761 968

## Description

### Technical Field of the Invention

The present invention refers to an improved method for drying compressed gas, in particular compressed air, and an apparatus of a hybrid kind for carrying out such method.

### Background of the Invention and Related State of the Art

As is generally known, in a large variety of industrial plants use is currently made of compressed air both in equipment intended for operating a variety of machines and tools and as a process medium. Compressed air is known to contain a certain percentage amount of moisture in the form of water vapour. Under the circumstances, if the temperature of compressed air decreases below dew point, the water vapour content thereof is caused to condense under formation of water droplets. Now, both generally high concentrations of water vapour and the presence of liquid in compressed air are generally known as being the main cause of corrosion and premature breakdown of piping systems, leading eventually to a malfunction or even full unserviceableness of the machines and apparatus that use compressed air.

There are various kinds of dryers currently in use to cope with this problem. Known are in particular the so-called refrigeration-based compressed-gas dryers and adsorption-type compressed-gas dryers.
Refrigeration-based compressed-gas dryers substantially comprise two heat exchangers, i.e. a heat-recovery arrangement and an evaporator. A refrigerant medium is used to cooling purposes, which is caused to flow, i.e. circulated in the evaporator being part of a refrigerating circuit.
Adsorption-type compressed-gas dryers are used whenever the need arises for a dew point under pressure to be obtained, which is lower than 0°C, e.g. -40°C. In this case, no use can in fact be made of a refrigeration-based compressed-gas dryer, since icing, i.e. ice formation would occur in the evaporator.
Distinction is generally made between two main kinds of adsorption-type compressed-gas dryers: (i) adsorption-type compressed-gas dryers using regeneration under cold conditions, which are usually employed to cope with medium-to-low flow rates (for example, up to 10-20 m³/min), and (ii) adsorption-type compressed-gas dryers using regeneration under hot conditions, which are usually employed to cope with medium-to-large flow rates (for example, higher than 10 to 20 m³/min). In both cases, the dryers include two under-pressure reservoirs (columns), which contain solid material capable of adsorbing water-vapour molecules. Their operation is a cyclic one, since - while a column is working in the adsorption mode - the other one is either working in the regeneration mode or simply waiting for the first one to complete its working cycle. In adsorption-type compressed-gas dryers using cold regeneration, the working cycle of each column includes following steps: (i) adsorption, in which compressed air is let into a column, where it flows through the mass of adsorbing material to eventually reach the desired dew point; (ii) depressurization of the column concerned; (iii) regeneration of the adsorbing material, in which the dry compressed air generated in the column working in the adsorption mode expands into a calibrated orifice down to atmospheric pressure, flows into the column working in the regeneration mode, and causes water to be de-adsorbed; (iv) pressurization, in which the pressure in the column is brought up again to the value required for a new adsorption cycle to be able to start. This kind of dryer is characterized by its being relatively simple in construction, but involving a remarkable usage of compressed air and, hence, energy.
In adsorption-type compressed-gas dryers using hot regeneration, the working cycle of each column typically includes following steps: (i) adsorption; (ii) depressurization; (iii) heating up, in which air taken in from outside is heated up and delivered onto the adsorbing material in the column so as to cause water to be de-adsorbed therefrom; (iv) cooling down, in which the adsorbing material in the column is cooled down to a temperature that is as close as possible to the temperature of the air to be dried; (v) pressurization. This kind of dryer has a lower specific energy usage (i.e. compressed-air usage as added to energy usage) than an adsorption-type dryer with cold regeneration, but is certainly more complex from a construction point of view and, therefore, more expensive.
Compressed-gas dryers of a hybrid type can also be found on the market, which are generally intended to handle medium-to-high flow rates (i.e. 20 to 150 m³/min). In these dryers, downstream from a refrigeration-based dryer there is provided an adsorption-type dryer using hot regeneration. The refrigeration-based dryer enables more than 80 percent of the water contents in the compressed air to be removed, as well as a dew point under pressure of +3°C to be reached. As a result, the adsorption-type dryer may advantageously be sized in view of working under less demanding conditions, so as to go down to a dew point of -40°C. This solution has been studied in view of saving on energy, by practically gearing energy usage to the amount of water being adsorbed in each cycle. However, even if such amount of water is considerably reduced, energy usage would not go down proportionately, since an amount of energy is anyway required to heat up and cool down the adsorbing material contained in the columns, which is partly independent of the amount of adsorbed water. Therefore, dryer manufacturer are endeavouring in an attempt to also modify the operating parameters of the equipment accordingly. For example, the waiting or stand-by time of the just regenerated column is increased in view of making the most out of the column that is working in the adsorption mode, while however concurrently increasing total cycle time. Attempts are furthermore made at reducing the amount of adsorbing material used, but the size of the columns keeps anyway quite remarkable and the complexity of the dryer with hot regeneration is by no way reduced, so that it can be conclusively stated that compressed-gas dryers of the hybrid kind, as they are currently known in the art, are rather complex, and expensive, in both construction and operation and, therefore, scarcely adapted to be used in connection with medium-to-small capacity plants.
EP 1 994 975 A1 discloses a hybrid apparatus for drying compressed air, comprising a refrigeration-based dryer and an absorption dryer downstream of the refrigeration-based dryer. The absorption dryer comprise two columns filled with adsorbent material and included in a circuit for compressed air to work alternatively between adsorption and regeneration mode. Such an apparatus uses a great amount of adsorbing material, so as it is not suitable to be used for medium-to-small flow rates and plant capacities.
US 4,761,968 discloses a high efficiency system for removing moisture from compressed air and the like as used in pneumatic systems. To effectively achieve dew points of about -100 degrees F., the system utilizes two integrated dryer stages. The first stage causes the incoming air to be cooled to a dew point of about -35 to -40 degrees through the use of a refrigerant flowing in a heat exchanger to remove the heat of the air. The second stage of drying is achieved by passing the outlet air from the first stage, after removing moisture droplets and mist via a separator unit, into a heatless bed of desiccant or like material. Preferably, two beds are employed so as to permit one bed to be removing moisture while collected moisture is being removed (purged) from the other bed. This purging is achieved by using a small portion of the product air of the system that is heated by passing this air through a heat exchanger in the refrigerant system so as to use normally waste heat of the heated refrigerant to raise the temperature of the purge gas substantially to more effectively purge the moisture. This substantially reduces the amount of product air that is utilized for the purge.

### Summary of the Invention

It is therefore a main object of the present invention to provide a compressed-gas, in particular compressed-air dryer of a hybrid kind, which is effective in combining the features of a refrigeration-based dryer and an adsorption-type dryer in an innovatory manner.
Within such general object, another purpose of the present invention is to provide a hybrid-type compressed-gas dryer, which has such small size as to be able to be contained within a single casing.
Yet another purpose of the present invention is to provide a hybrid-type compressed-gas dryer, which involves installation and maintenance costs that are sensibly lower than the ones connected with prior-art dryers of the same kind.

It is a further object of the present invention to provide an improved method for drying compressed gas, in particular compressed air, which proves suitable to also cope with medium-to-small flow rates and plant capacities, since using plant-related and operating solutions similar to the ones that are typical of an adsorption-type dryer with cold regeneration, and further allowing for the use of reduced amounts of adsorbing material.
In this connection, it is another purpose of the present invention to provide an improved method for drying compressed gas, which is effective in combining the advantages of an adsorption-type dryer with cold regeneration (low plant and installation costs) with those of an adsorption-type dryer with hot regeneration (low operating costs).
Still another object of the present invention is to provide an improved method for drying compressed air, which enables energy usage to be sensibly reduced, with a corresponding energy saving effect, under decreasing load conditions, since a small percentage of dry compressed air is used in the heating and cooling phases of the adsorbing material in the columns, and the outlet temperature of the regeneration air is controlled during such phases.

According to the present invention, these and further aims are reached in a compressed-gas dryer, which incorporates the characteristics and features as recited in the appended claims.

### Short Description of the Drawings

Anyway, the structural, operating and construction-related features of the present invention, as well as the advantages thereof over similar prior-art solutions, will be more readily understood from the detailed description of an exemplary embodiment that is given below by way of non-limiting example with reference to the accompanying drawings, in which:
- Figure 1 shows a block diagram of a refrigeration-based compressed-gas dryer according to the prior art;
- Figure 2 shows the operation schematics of an adsorption-type compressed-gas dryer using cold regeneration according to the prior art;
- Figure 3 shows the operation schematics of an adsorption-type compressed-gas dryer using hot regeneration according to the prior art;
- Figure 4 shows a block diagram of a hybrid-type compressed-gas dryer according to the prior art;
- Figure 5 shows an operation schematics of a hybrid-type compressed-gas dryer, featuring an air flow from the bottom upwards during the regeneration phase, according to the present invention;
- Figure 6 shows an operation schematics of a hybrid-type compressed-gas dryer, featuring an air flow from top downwards during the regeneration phase, according to the present invention.
Same reference numerals are used in the Figures to indicate same or corresponding functional items and components.

### Detailed Description of the Invention

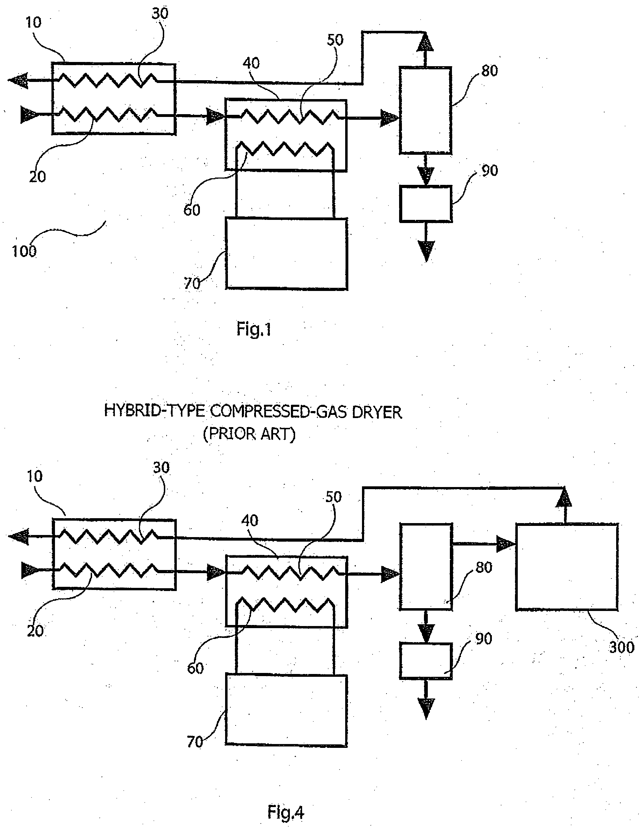

With reference to Figure 1, this can be noticed to schematically illustrate - in the form of a block diagram - a refrigeration-based compressed-gas dryer according to the prior art, which comprises two heat exchangers, i.e. a heat-recovery arrangement (10), or gas-to-gas heat exchanger, and an evaporator (40).
The compressed air to be dried is initially pre-cooled in a pre-cooling section (20) of the heat-recovery arrangement (10) ; it then exits such pre-cooling section and keeps cooling down to a further extent in a cooling section (50) of the evaporator (40) until it reaches the desired dew point. For such cooling-down action, use is generally made of a refrigerant or coolant medium that evaporates in an evaporation section (60) of the same evaporator. Such evaporating coolant medium is circulated in a refrigerating circuit (70).
Thereupon, the compressed air is caused to flow into a condensate separator arrangement (80), or air condenser, in which condensed water vapour is collected and separated from the air. The resulting condensate is then discharged through a proper drain provision (90).
The air exiting the condensate separator arrangement (80) flows through the heating section (30) of the heat-recovery arrangement (10) so as to pre-cool the compressed air flowing through the pre-cooling section (20).
If the condensate separation efficiency of the condensate separator arrangement (80) is high enough (>99.5%), the dew point under pressure substantially coincides with the temperature of the compressed air exiting the evaporator (40), and - for a refrigeration-based compressed-gas dryer - it typically lies anywhere between 3 °C and 7 °C.

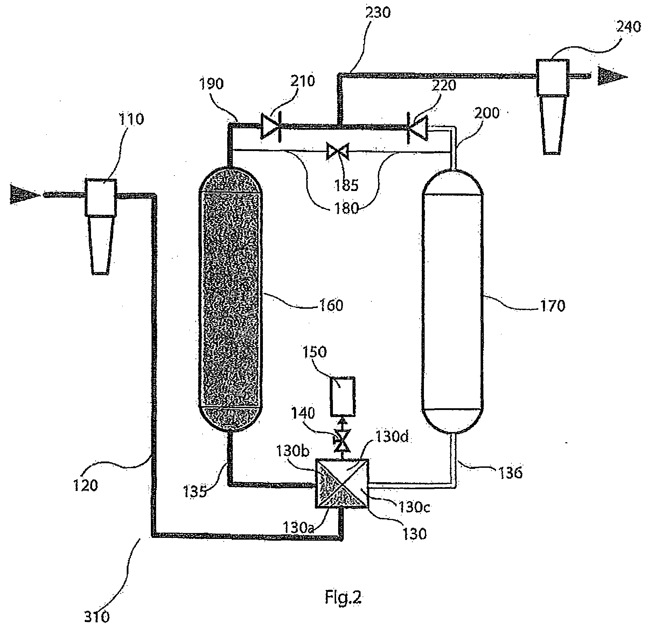

Figure 2 shows the operation schematics of an adsorption-type compressed-gas dryer using cold regeneration according to the prior art.
The compressed air flows into a strainer or filter (110), in which possible oil contained in the air is removed down to a concentration of approx. 0.01 ppm; it then flows through the pipe (120) and eventually enters a four-way valve (130) to be selectively delivered - via two conduits (135, 136) - into one of two columns (160, 170) under pressure, which contain adsorbing material.
When one of the columns is working in the adsorption mode, the other column is de-pressurized by opening a valve (140) and exhausting the air outside through a silencing or muffling filter (150).
The dried compressed air exits the columns (160) or (170), as the case may be, by flowing through the pipe conduits (190) or (200) and the non-return valves (210) or (220), respectively, another piping (230) and a dust filter (240), to eventually be let again into the operating or working cycle of the industrial plant.
For the adsorbing material contained in the columns (160) or (170) to be regenerated after adsorption, use is made of part of the dried compressed air that flows out of one of the columns and - to regeneration purposes - is in fact delivered into the other column via a piping (180), in which there is provided a calibrated orifice (185). Then, the resulting moisture-laden air, carrying the moisture it has de-adsorbed from the adsorbing material, is exhausted outside via the pipe conduits (135) or (156), the valves (130) or (140), and the filter (150).
This particular kind of compressed-gas dryer is certainly characterized by a substantial simplicity in its construction, but involves a remarkably high compressed-air and, hence, energy usage. Under operating conditions as provided for by ISO7183 standards (saturated compressed air at an inflow temperature of 35°C and pressure of 7 bar(g)), manufacturers state that the orifice (185) is calibrated so as to let - during the regeneration phase - a percentage of air therethrough that amounts to 21% with reference to the total flow rate of dried compressed air exiting the dust filter (240) during the regeneration phase. With reference to the whole cycle, such percentage amounts to 16.7%. Considering that approx. 6 kW are needed to produce 1 m³/min of compressed air at 7 bar(g), it ensues that 1.0 kW/( m³/min) is required to produce compressed air with a pressure dew point, i.e. dew point under pressure of -40°C.

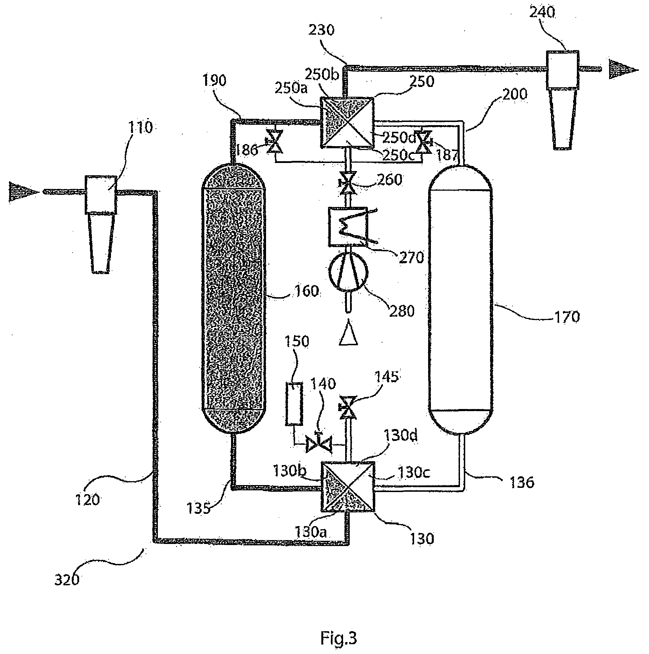

Figure 3 shows the operation schematics of an adsorption-type compressed-gas dryer using hot regeneration according to the prior art.
As in the case considered above, the compressed air flows into a strainer or filter (110), in which possible oil contained in the air is removed down to a concentration of approx. 0.01 ppm; it then flows through the pipe (120) and eventually enters a four-way valve (130) to be selectively delivered - via two pipe conduits (135) or (136) - into one of two columns (160) or (170) under pressure, which contain adsorbing material. When one of the columns is working in the adsorption mode, the other column is de-pressurized by opening a valve (140) and exhausting the air outside through the silencing or muffling filter (150).
The dried compressed air exits the columns (160) or (170), as the case may be, flows through a four-way valve (250) and is let again into the operating or working cycle of the industrial plant via the piping (230), in which there is fitted the dust filter (240).
For the adsorbing material contained in the columns (160) or (170) to be regenerated after adsorption, air is taken in from outside with the aid of a blower (280); it is then heated up by means of an electric heater (270) and selectively delivered into the two columns (160) or (170) via a valve (260) provided in a series arrangement with the four-way valve (250). The resulting moisture-laden air, i.e. carrying the moisture it has de-adsorbed from the adsorbing material, is exhausted outside via the pipe conduits (135) or (156) and a valve (145).
Thereupon, the process for cooling down the adsorbing material is started, in which the valve (260) and the valve (145) are shut, accordingly, while one of the valves (186) or (187), as appropriate, and the valve (140) are on the contrary opened. The dried compressed air expands down to atmospheric pressure and flows from an adsorption column over to the other one via the four-way valve (250). The cooling air, which gets heated up in the process, flows out from one of the pipe conduits (135) or (136), as the case may be, passes through the four-way valve (130) and is exhausted outside via the valve (140) and the muffling filter (150). A percentage of compressed air typically lying anywhere between 5 and 10% is used to cooling purposes. The cooling-down phase is aimed at bringing the adsorbing material in the columns down to a temperature lying as close as possible to the temperature of the air to be dried.
This kind of compressed-gas dryer is rather complex and, therefore, expensive from a construction point of view, but involves a specific energy usage that is certainly lower than the one of the afore-considered compressed-gas dryer using cold regeneration. Based on manufacturers' specifications, power consumption amounts to 0.49 kW/(m³/min) in this case, to which there shall be added the usage of compressed air needed for cooling (approx. 2% of total flow rate), which corresponds to additional 0.12 kW/(m³/min), leading to a total of 0.61 kW/(m³/min). For these reasons (higher plant costs, but lower operating costs) compressed-gas dryers using hot regeneration are typically used in applications involving flow rates in excess of 10 to 20 m³/min.
There are several other types of adsorption compressed-gas dryers using heat to regeneration purposes, actually. However, final conclusions in all these cases are similar to the ones reached with reference to the most common type of adsorption compressed-gas dryer using hot regeneration considered above.

Figure 4 shows a block diagram of a hybrid-type compressed-gas dryer according to the prior art. As can be seen, this apparatus is comprised of a refrigeration-based dryer that includes two heat exchangers (10, 40), a refrigerating circuit (70), a condensate separator arrangement (80) and a condensate drain arrangement (90); downstream from this refrigeration-based dryer there is connected an adsorption-type dryer using hot regeneration (300) similar to the above-described one.
In view of ensuring the same energy efficiency level of a refrigeration-based dryer of the traditional kind, upon its having been dried in the adsorption-type dryer (300), the compressed air is in this case allowed to flow back into the heating section (30) of the heat-recovery exchanger (10) of the refrigeration-based dryer.
As already noted hereinbefore, these compressed-gas dryers of the hybrid type are advantageous from an energy-usage point of view, but keep being complex from a construction point of view, involving both considerable sizes and very high costs.

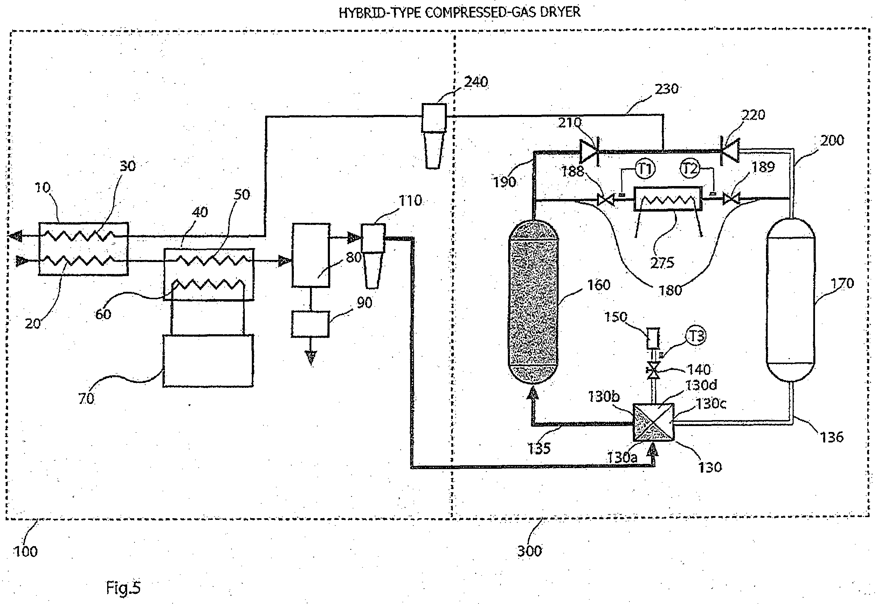

Figure 5 shows the operation schematics of a hybrid-type compressed-gas dryer according to the present invention.
The inventive hybrid-type compressed-gas dryer is comprised of a refrigeration-based dryer of a traditional kind, downstream from which there is connected an adsorption-type dryer (300), whose construction and operating mode are situated halfway between the ones of an adsorption-type dryer with cold regeneration and the ones of an adsorption-type dryer with hot regeneration.
In fact, solely dried compressed air is used to regeneration purposes, as this occurs in adsorption-type dryers with cold regeneration, but this compressed air is heated up by means of an electric heater, or the like, as this occurs in adsorption-type dryers with hot regeneration, wherein it shall however be appreciated that the percentage of compressed air used for regeneration, the cycle times, the regeneration mode and the specific amount of adsorbing material used are fully different from the ones used in prior-art dryers.

With reference to Figure 5, the inventive hybrid-type dryer will be now described along with the related operating mode and process.
The compressed air flowing in from the refrigeration-based dryer (100) enters the filter (110), flows through the pipe conduit (120) and into a valve group (130). This valve group (130) is preferably comprised of a four-way valve, which may be replaced by a plurality of appropriately coordinated one-way valves. If the column (160) is working in the adsorption mode, the compressed air flows through the sections (130a and 130b) of the valve (130) and the pipe conduit (135) to eventually flow into the column (160). Upon its having flown across the column (160) and reached the desired dew point, the compressed air exits the column through the pipe conduit (190), flows through the non-return valve (210) and the pipe conduit (230) to eventually flow out through the dust filter (240) and back to the heat-recovery arrangement (10) in the heating section (30) of the refrigeration-based dryer (100). From the latter, the dried compressed air is then let again into the operating or working cycle of the industrial plant.

At the beginning of the adsorption phase in the column (160), the column (170) is de-pressurized by opening the valve (140). The compressed air is exhausted outside through the muffling filter (150) and the pressure in the column (170) reaches down to the value of atmospheric pressure.
Owing to the pressure difference existing between the outlet of the column (160) and the atmospheric pressure prevailing in the column (170) (leaving pressure drops and losses out of consideration), through a pipe conduit (180) there is caused to pass an air flow rate that moves respectively through a calibrated orifice (188), an electric heating element (275) and a second calibrated orifice (189), which is similar to the first one.
The electric heating element (275) may be switched on, i.e. energized either at the beginning of the regeneration phase, i.e. concurrently with the opening of the valve (140), or it may be switched on, i.e. energized in advance so as to ensure that the compressed air flowing through the pipe conduit (180) is able to flow out at a high temperature right from the beginning.
The air exiting the pipe conduit (180) at a high temperature (e.g. at 130 to 200°C) flows through the pipe conduit (200) and into the column (170), exchanges heat with both the adsorbing material and the vessel containing it, flows eventually out through the pipe conduit (136), passes through the sections (130c and 130d) of the four-way valve (130) and is exhausted outside by flowing through the valve (140) and the muffling filter (150).
Controlling the temperature of the air that is heated up by the electric heating element (275) is done by having a temperature probe (T2) sensing the air temperature at the outlet of the electric heating element, and switching the same heating element on and off, or modulating the power output thereof, accordingly. When the regeneration process has to be carried out in the column (160), the temperature control will of course be switched over to a temperature probe (T1).
Selecting two orifices that are similar to each other is based on the need for a same air flow rate to be ensured in the pipe conduit (180) both when regenerating is carried out in the column (170) and when it is on the contrary done in the column (160). In fact, if a single calibrated orifice is used, as located for example at the left of the electric heating element (275), owing to the remarkable difference in temperature that would be established between the upstream side and the downstream side of the same electric heating element (e.g. approx. 180°C), there would arise significant differences in the flow rates passing therethrough when it is the column (160) that is being heated instead of the column (170), since the air passing through the calibrated orifice would in this case be cold, while it would on the contrary be hot in the subsequent cycle. Considering that pressure drops through an orifice vary by approx. 10% with each 30°C-variation in air temperature, the resulting difference in air flow rate would turn out as being quite significant. Using two similar calibrated orifices, as located one on the left and one on the right of the electric heating element, there is only a difference of approx. 10 to 15% between the air flow rate through the pipe conduit (180) during the heating phase and the flow rate through the same pipe conduit during the cooling phase, but this is not a problem, actually, since the variation will in all cases be the same regardless of the column that is being regenerated, so that all it takes is regulating heating and cooling times accordingly.
As largely known, the heating and cooling phases that are carried out in the columns (160 and 170) perform the regeneration process thereof, i.e. the process aimed at regenerating the adsorbing material after an adsorption process.
The heating phase can be interrupted, i.e. cut off based on:
▪ a pre-set time that depends on rated design specifications;
▪ the temperature reached in the lower portion of the column being regenerated or the temperature of the air exiting the column being regenerated, as measured by e.g. a probe (T3) or, as an alternative thereto, by two probes located in the lower portion of the columns (160, 170), respectively, wherein the whys and wherefores at the base of such particular option shall be explained further on in this description.

In the cooling phase, the electric heating element is switched off and the dry compressed air keeps expanding through the orifices (188) and (189), flowing through the column (170), and exiting through the valve (140) and the muffling filter (150).
The cooling phase can be terminated, i.e. cut off based on:
▪ a pre-set time that depends on rated design specifications;
▪ the temperature of the air exiting the column being regenerated, as measured by e.g. the probe (T3), wherein the whys and wherefores at the base of such particular option shall be explained further on in this description.

In the pressurization phase, which follows the cooling phase, the valve (140) closes so as to allow the column (170) to reach up to the same pressure as the one prevailing in the column (160), so that it becomes ready to start a new adsorption cycle. The column pressurization stage may be allowed to continue for a much longer time than the minimum time required (approx. 1 minute) to take the greatest possible advantage out of the adsorption capacity of the other column working in the adsorption mode.

The main feature of the novel hybrid-type compressed-gas dryer according to the present invention is represented by the regeneration phase thereof, which comprises both the heating and the cooling of the columns containing the adsorbing material.
Current hybrid compressed-gas dryers regenerate the column that has completed the adsorption phase in the traditional manner (i.e. they heat up the adsorbing material to a high temperature, e.g. of 130°C or more, to then cool it down) and then extend the cycle time (e.g. from six to sixteen hours) by increasing the pressurization time in view of making the most of the capacity of the adsorbing material in the column that is drying up the moist compressed air.
If only dry compressed air is used to carry out these two phases, and energy consumption has to be desirably cut as compared with currently used systems, the need arises for both specific dry-air usage and specific power usage to be limited to a minimum.
The dry air used for regeneration represents the highest operating cost and, for this cost to be reduced, the need arises for the rate of air flowing through the column being regenerated to be reduced. However, if such flow rate is decreased below a certain value, which is characteristic of each column and the amount of water to be de-adsorbed, very detrimental condensation effects may follow.
In fact, during the heating phase, the hot air entering the upper portion of the column to be regenerated undergoes an increase of the water-vapour content thereof, i.e. takes in moisture, but, as it keeps flowing downwards along the column, it cools down, thereby causing the water vapour it took in by deadsorption in the upper portions to condense.
Such condensation has two negative effects:
1. in the first place, it does not allow water de-adsorbed in the upper portion of the column to be properly let out of the same column, since it is caused to condense in the lower portions of the column, with the result that, in the subsequent cycle, the column will not be able to ensure that the desired dew point is reached;
2. the liquid may then damage or spoil the adsorbing material, so that the need arises for water-resistant materials to be solely used.

The occurrence of water-vapour condensation effects is a generally known fact, but it is usually limited to sections lying close to the outlet of the columns. This is also the reason why use is frequently made of two grades of adsorbing material in the columns, i.e. a water-resistant grade of adsorbing material in the lower portion and a non-resistant grade of adsorbing material in the upper portion, i.e. a grade that is not required to be water-resistant, but features improved adsorption capacities and/or efficiency instead.
Considering that the water content to be removed from moisture-laden compressed air in a hybrid dryer is 7.6 times lower (with an inflow dew point of 3°C, instead of 35°C, and a pressure of 7 bar(g)) than in an adsorption dryer of the traditional type, it may be reasonably contemplated for also the specific kg/(m³/min) amount of adsorbing material to be reduced by approximately the same factor. This is possible also due to the fact that - as this has been thoroughly confirmed experimentally - a height of just a few dozen centimetres of adsorbing material is sufficient (for a same diameter of the column) for a pressure dew point, i.e. a dew point under pressure of -40°C to be reached - as against a height of 1 to 1.5 metres in traditional dryers - when entering the adsorption dryer at a temperature of approx. 3°C.
A reduction in the amount of adsorbing material used has the effect of favouring also a reduction in power usage per cycle. In fact, it just cannot be avoided to heat up the adsorbing material and the vessel containing it to regeneration temperature, so as it just cannot be avoided to cool them down, so that a reduction in the amount of such material means that it takes a smaller amount of energy to heat up the material to regeneration temperature, as well as a smaller amount of dry, cold compressed air to cool it down.
It should finally be noticed that the capacity of an adsorbing material to adsorb water vapour is strongly affected by temperature: i.e. the lower the temperature of the material, the greater its capacity to adsorb water vapour.

In the novel hybrid-type compressed-gas dryer according to the present invention, for both the flow rate of dry air needed for regeneration and the usage of power needed for heating and cooling to be able to be further reduced, use has been made of:
- a heating method that does not call for the whole amount of adsorbing material to be heated up to regeneration temperature, in that just a minimum amount of heat is delivered into the column as strictly necessary to de-adsorb, and allow it to flow out of the column being regenerated, the amount of water that had been adsorbed in the previous adsorption phase. Such minimum amount of heat is represented by a minimum by-passed flow of dry compressed-air that is heated up by the electric heating element to a pre-established temperature, and that is allowed to flow for a minimum time as pre-established or determined by the outlet temperature of the regeneration air. This minimum amount of heat corresponds to a flow rate amounting to approx. 4 to 6% of dry compressed air heated up to a temperature of approx. 130 to 200°C. In this manner, at the end of the heating phase, the upper portion (close to the column inlet) will have changed to the inlet temperature of the dry regeneration air, whereas the lower portion (close to the column outlet) will be at such temperature as to ensure that all previously absorbed water is removed and let out of the column, wherein this temperature may typically vary within a range from approx. 30 °C to approx. 80 °C;
- a cooling method that does not call for the whole amount of adsorbing material to be cooled down to the temperature of the drying air flowing into the column. In practice, during the cooling phase, the dry air "pushes", i.e. drives the heat that had built up in the upper portion of the column downwards, whereby this heat keeps practically going on in regenerating the adsorbing material in the column portions lying therebelow throughout the cooling period, without any additional heat and dry compressed air being wasted, actually. The cooling process is stopped prior to reaching down to a temperature (T3) in the outlet section of the column, which is equal to the inlet temperature (i.e. approx. 3°C), e.g. upon reaching a temperature at a value situated anywhere between 10 and 30°C. When the adsorption process is then started in this column, moisture-laden cold air will flow therethrough in a from-bottom- upwards direction, i.e. in a counter-current flow direction relative to the flow direction of the dry cooling air, so that this flow of compressed air will keep cooling down the still relatively hot lower sections of the column, while it will on the contrary run into already cold sections in the upper portion of the column. These relatively high temperatures of the lower sections of the column might cause the capacity of the column to ensure the desired dew point to suffer a decrease. However, they are not a problem in reality. In fact, in the initial period of the adsorption phase the capacity of the adsorbing material is at its maximum in the upper sections of the column (regeneration just ended) and, as a result, it is such as to succeed in ensuring that the desired dew point is reached, actually. In the following few minutes, even the lower sections of the column cool down, so that the adsorption capacity of the column is restored to its optimum.

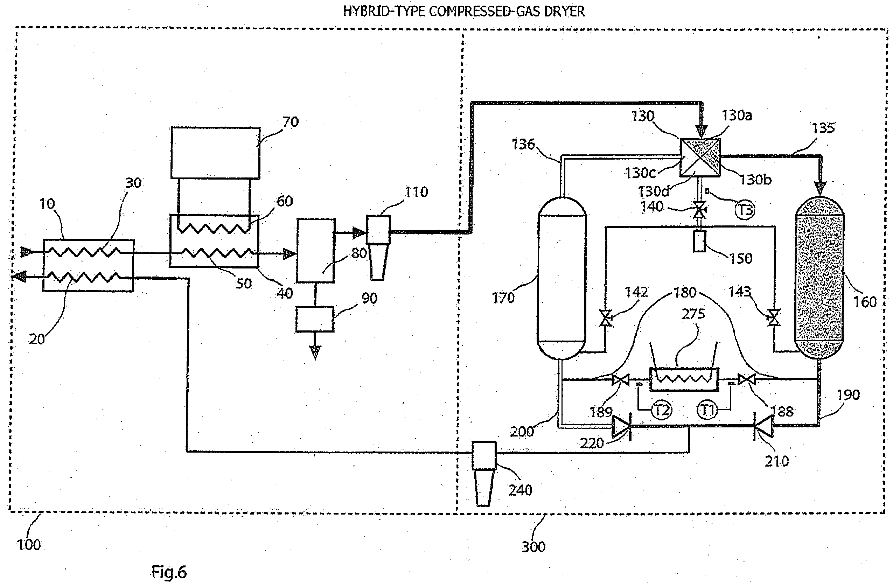

It should also be specially stressed that, at the beginning of the cooling phase, the electric heater (275) is still quite hot and is gradually cooled by the dry air flowing therethrough. In this way, the dry air heats up and carries such heat into the column without wasting it, actually.
The cycle time of the novel hybrid-type compressed-gas dryer according to the present invention is situated somewhere halfway between the cycle time of an adsorption-type compressed-gas dryer using cold regeneration and the cycle time of an adsorption-type compressed-gas dryer using hot regeneration.
Hence, for a pressure dew point, i.e. a dew point under pressure of -40°C to be obtained with saturated compressed air at an inflow temperature of 35°C and a pressure of 7 bar(g):
- typical adsorption time of an adsorption-type compressed-gas dryer using cold regeneration = 5 minutes;
- typical adsorption time of an adsorption-type compressed-gas dryer using hot regeneration = 4 to 8 hours;
- typical adsorption time of the novel hybrid-type compressed-gas dryer according to the present invention = 1 to 3 hours.
An alternative solution to the afore-described one may be embodied by replacing the arrangement including two calibrated orifices (188, 189) and an electric heating element (275) provided therebetween with an arrangement including just a single calibrated orifice provided in a site between two electric heating elements. This solution would still prove functionally effective, although certainly more expensive.
A further alternative embodiment might be based on the use of a single calibrated orifice associated to a single electric heating element. This would enable costs to be certainly cut, however at the expense of the overall apparatus efficiency.
Yet another alternative embodiment is based on reversing the flow direction of the air within the columns (160) and (170) during the adsorption phase and the regeneration one, so that the compressed air is able to flow from top downwards during the adsorption phase, as this is best shown in Figure 6. In this way, the problem of fluidization during the adsorption phase is definitely done way with. For this problem to be eliminated also at the beginning of the heating phase, which starts with the de-pressurization of the column (160) or (170), two small valves (141) and (142) may be added for connection upstream to the lower portion of the column (170) and (160), respectively, and downstream from the inlet of the muffling filter (150). The valve (141) or, as the case may be, (142) is opened at the beginning of the column de-pressurization phase, and is kept in the open state thereof for a pre-established period of time so as to allow pressure to be released from the column (160) or (170), respectively, while keeping the valve (140) shut. Once such pre-established period of time is elapsed, the valve (141) or, as the case may be, (142) is closed, the valve (140 is opened and the electric heating element (275) is energized to have the afore-described heating phase started.
It should be once again stressed that, while the present invention has basically been described as particularly referring to the drying of compressed air, it shall be understood as applying to any other kind of compressed gas, as well.
Now, therefore, thanks to:
- the way in which the heating phase has been embodied,
- the way in which the cooling phase has been embodied,
- the sensible reduction in the specific amount of adsorbing material used,
in the novel hybrid-type dryer according to the present invention it has been possible to provide and carry out a regeneration cycle (heating and cooling) with a flow rate of dry air that typically varies from approx. 4% to approx. 6% of the inlet flow rate. If referred to the whole cycle, this flow rate will vary from approx. 2% to approx. 3%, actually, since the column pressurization time is not reduced to a minimum, as usual, so as to be able to work with a higher (for example, approx. twice as much) flow rate of dry regeneration air and prevent the afore-described condensation occurrence from keeping the previously adsorbed water from being totally driven out.
It should further be noticed that these data may be further improved, actually, if use is made of a more performing grade of adsorbing material. As far as is generally known at present, water-resistant silica gel may be considered as a suitable adsorbing material in this connection.

Yet another advantage that is generally ensured by the novel hybrid-type dryer according to the present invention lies in the energy saving effect under partial load conditions, owing to the possibility given for the need to be done away with of having a dew-point meter installed and used (quite expensive in the case of small-capacity equipment), as this is the case in current adsorption-type dryers. This can be achieved by controlling, i.e. sensing the temperature (T3) and cutting off
- the heating phase when the temperature (T3) is sensed to be in excess of a pre-set value, which might be situated anywhere in the range between 30°C and 60 °C depending on the type of adsorbing material used,
- the cooling phase when the temperature (T3) is sensed to have moved down below a pre-set value, which might be situated anywhere in the range between 10°C and 30 °C, as appropriate.
In fact, under small load conditions, the amount of adsorbed water, which has therefore to be de-adsorbed, is correspondingly small, so that - during the heating phase - the above-cited temperature (T3) is able to rise at a much quicker rate than in normal or rated load conditions. If this heating phase is cut off based on the sensed value of this temperature (T3), i.e. by having such temperature sensed, dry compressed air can be effectively prevented from being wasted to heating purposes. In the same way, if the temperature (T3) reaches down to the desired value at a quicker rate during the cooling phase, switching over to the column pressurization phase sooner means saving on energy.

Controlling the operating or working cycles of the apparatus according to the present invention can therefore be done in a variety of manners, such as in particular:
1. with fixed heating, cooling and pressurization times for the columns (160, 170) containing the adsorbing material;
2. with variable heating and cooling times according to or as a function of the temperature values being sensed by the probe (T3), and fixed pressurization times.
A further cycle control option is based on working with heating and cooling times that vary in accordance with or as a function of the temperature values being detected by the sensor (T3), and a pressurization time that varies in accordance with or as a function of the dew point of the compressed air exiting the dryer (300). In this case, use is made also of a dew-point sensor, which controls the interchanging sequence of the columns (160, 170) in the operative state thereof. This mode of operation is particularly advantageous in view of the ability to save energy to a still further extent when the equipment is working under partial load conditions.

Other advantages that may be derived from using a hybrid-type dryer according to the present invention are:
1. an improved quality of the compressed air, thanks to the fact that the oil-removal filter (110) is located in the coldest portion of the plant, so that the oil concentration remaining in the air will be lower;
2. the possibility for the sole refrigeration-based dryer to be allowed to operate in summer, thereby saving therefore energy in all those applications in which the requirement for a dew point of as low as e.g. -40°C is solely due to the need for condensation to be prevented from occurring on compressed-air distribution piping as brought about or induced by low ambient temperatures. This operating mode can be obtained by installing an either manual or automatic valve adapted to bypass the adsorption dryer, and programming the control unit of the novel, i.e. inventive hybrid-type dryer accordingly. In other words, the possibility is given for an operating mode of the equipment of the summer/winter type to be provided;
3. the possibility - under conditions of high inflow temperatures of the compressed air (e.g. 40°C to 50°C), which are known to put heavy penalties on current adsorption-type dryers - for the sole refrigeration-based dryer to be oversized, actually (approx. 20% of greater capacity every 5°C of higher inflow temperature of the compressed air in the hybrid-type dryer as compared with standard conditions, as provided for by ISO 7183). In some situations, the hybrid-type dryer is the sole practicable option, unless systems are specially installed to provide for cooling the compressed air.
It should moreover be noticed that the novel hybrid-type dryer according to the present invention will be provided with a single control unit (not shown in the Figures) adapted to receive the signals being output by the temperature probes (T1-T3) and control the totality of the valves provided in the equipment based on the respective operating programmes.

To calculate the specific energy usage of the novel hybrid-type dryer according to the present invention with reference to standard conditions as set forth in ISO 7183 (i.e. saturated compressed air at an inflow temperature of 35°C and pressure of 7 bar(g)), and considering a pressure dew point of -40°C, three conditions need to be taken into account, i.e.:
- power input to the refrigeration-based dryer: approx. 0.10 kW/(m³/min);
- power used to produce a flow rate of approx. 2.5% of compressed air for regeneration: approx. 0.15 kW/(m³/min) under the assumption that approx. 6 kW/(m³/min) are needed to produce compressed air at 7 bar(g);
- power used to heat up the dry air: approx. 0.08 kW/(m³/min);
which therefore gives a total of approx. 0.33 kW/(m³/min).
Briefly, this compares with the most common types of adsorption dryers in use today as follows (approximate values):

| | Adsorption dryer with cold regeneration | Adsorption dryer with hot regeneration | Hybrid dryer according to invention |
|---|---|---|---|
| Total specific power usage, kW/(m³/min) ⁽¹⁾ | 1 | 0.51 | 0.33 |

| | | | |
|---|---|---|---|
| (1) In accordance with ISO 7183 standard provisions (saturated compressed air at an inflow temperature of 35°C and pressure of 7 bar(g)), and considering a pressure dew point of -40°C | | | |

It can of course be readily appreciated that, if the dew point and inflow temperature in the dryer (300) is higher than 3°C, the flow rate of dry compressed air needed for regeneration must be increased. For example, if the dew point is 7°C, the amount of water to be adsorbed increases by approx. 30%, so that such flow rate should - on a roughly indicative base - be increased accordingly.

Conclusively, the novel hybrid-type dryer according to the present invention differs from prior-art ones in following features:
- a new way of regenerating the adsorbing material,
- a sensible reduction in adsorbing material content of the columns (falling substantially in a line with the reduction in the amount of water to be adsorbed), under reduction of both in the diameter (anyway to such extent as to avoid fluidization occurrences) and - above all - the height of the columns,
- the use of solely a small percentage of dry compressed air for the heating and cooling phases,
- lower plant and installation costs (30% less, based on estimates) and an energy usage that is at least 20% lower than the one of an adsorption dryer with hot regeneration;
- suitability for use also in connection with medium-to-low air flow rates, as against adsorption dryers with cold regeneration (payback period of less than one year thanks to a lower energy usage by at least 60%), wherein a hybrid dryer of a current kind would on the contrary involve fully impracticable costs;
- possibility for it to be conveniently and easily contained within a single casing thanks to the reduced size of the columns,
- possibility for energy to be saved under varying load conditions of the equipment, by sensing the outlet temperature of the regeneration air during the heating and cooling phases, and controlling the process accordingly;
- possibility for maintenance costs to be reduced owing to a reduced amount of adsorbing material in the columns, considering that it is recommended that such material be replaced every 1 or 2 years.
Also, the novel hybrid-type dryer according to the present invention is characterized by specific energy consumption data that fall into a line with the rated ones of current hybrid dryers, i.e. approx. 0.33 kW/(m³/min).

## Claims

1. Hybrid apparatus for drying compressed air, comprising an adsorption dryer (300) and a refrigeration-based dryer (100), said adsorption dryer (300) being situated downstream of said refrigeration-based dryer (100), wherein the refrigeration-based dryer (100) comprises a heat-recovery arrangement (10), an evaporator (40) and an arrangement (80, 90) to separate and drain condensate including an air condenser or condensate separator (80), and wherein the adsorption dryer (300) comprises a dust filter (240), an oil-removal filter (110), a first column (160) and a second column (170), wherein said first column (160) and said second column (170) contain adsorbing material, and being included in a circuit for the compressed air so as to alternately work in the adsorption mode and the regeneration mode, and in which the compressed air entering the adsorption dryer (300) is taken in cold from the air condenser or condensate separator (80) after having caused to flow through said oil-removal filter (110), and the air exiting the adsorption dryer (300) flows back into the heat-recovery arrangement (10) after having caused to flow through said dust filter (240),
**characterized in that**
said first column (160) and said second column (170) are connected via a conduit (180) provided with two calibrated orifices (188, 189) having the same size and associated to at least one heater (275) interposed between said two calibrated orifices (188, 189) so as to reduce the flow-rate difference between the compressed-air streams flowing through the conduit (180) during the heating and cooling phases of the adsorbing material, respectively.

2. Hybrid apparatus for drying compressed air according to claim 1, **characterized in that** there are provided two temperature probes (T1 and T2) fitted inside the conduit (180) to control the heater (275).

3. Hybrid apparatus for drying compressed air according to any of the claims 1 to 2, comprising a valve group (130) adapted to selectively supply the compressed air to the columns (160, 170) of the adsorption dryer, **characterized in that** there is provided at least one temperature probe (T3) in a series arrangement with a valve (140) and a sound-deadening filter (150) to control both heating and cooling of the adsorbing material in the columns (160, 170) based on the temperature of the air being exhausted outside during regeneration of the columns (160 and 170).

4. Hybrid apparatus for drying compressed air according to claim 3, **characterized in that** there are provided two temperature probes (T3) situated in the lower portion of the columns (160, 170), respectively.

## Patentansprüche

1. Hybridvorrichtung zum Trocknen von komprimierter Luft, die einen Adsorptionstrockner (300) und einen Kältetrockner (100) umfasst, wobei der Adsorptionstrockner (300) stromabwärts von dem Kältetrockner (100) angeordnet ist, wobei der Kältetrockner (100) eine Wärmeregenerationsanordnung (10), einen Verdampfer (40) und eine Anordnung (80, 90) zum Trennen und Abführen von Kondensat einschließlich eines Luftkondensators oder eines Kondensattrenners (80) umfasst und wobei der Adsorptionstrockner (300) ein Staubfilter (240), ein Ölentfernungsfilter (110), eine erste Säule (160) und eine zweite Säule (170) umfasst, wobei die erste Säule (160) und die zweite Säule (170) ein Adsorptionsmaterial enthalten und in einem Kreis für die komprimierte Luft vorgesehen sind, um alternierend in dem Adsorptionsmodus und in dem Regenerationsmodus betrieben zu werden, wobei die in den Adsorptionstrockner (300) eintretende Luft kalt von dem Luftkondensator oder Kondensattrenner (80) aufgenommen wird, nachdem sie durch das Ölentfernungsfilter (110) geführt wurde, und wobei die aus dem Adsorptionstrockner (300) austretende Luft zurück in die Wärmeregenerationsanordnung (10) fließt, nachdem sie durch das Staubfilter (240) geführt wurde,
**dadurch gekennzeichnet, dass**
die erste Säule (160) und die zweite Säule (170) über eine Leitung (180) verbunden sind, die mit zwei kalibrierten Öffnungen (188, 189) versehen ist, die die gleiche Größe aufweisen und mit wenigstens einem Heizer (275) assoziiert sind, der zwischen den zwei kalibrierten Öffnungen (188, 189) angeordnet ist, um die Flussratendifferenz zwischen den durch die Leitung (180) fließenden komprimierten Luftströmen jeweils während der Heiz- und Kühlphasen des Adsorptionsmaterials zu reduzieren.

2. Hybridvorrichtung zum Trocknen von komprimierter Luft nach Anspruch 1, **dadurch gekennzeichnet, dass** zwei Temperaturfühler (T1 und T2) in der Leitung (180) für die Steuerung des Heizers (275) vorgesehen sind.

3. Hybridvorrichtung zum Trocknen von komprimierter Luft nach Anspruch 1 oder 2, die eine Ventilgruppe (130) umfasst, die ausgebildet ist, um die komprimierte Luft wahlweise zu den Säulen (160, 170) des Adsorptionstrockners zu führen, **dadurch gekennzeichnet, dass** wenigstens ein Temperaturfühler (T3) in einer Reihenanordnung mit einem Ventil (140) und einem Schalldämpfungsfilter (150) vorgesehen ist, um das Heizen und Kühlen des Adsorptionsmaterials in den Säulen (160, 170) basierend auf der Temperatur der Luft, die während der Regeneration der Säulen (160, 170) nach außen ausgeführt wird, zu steuern.

4. Hybridvorrichtung zum Trocknen von komprimierter Luft nach Anspruch 3, **dadurch gekennzeichnet, dass** zwei Temperaturfühler (T3) jeweils in den unteren Teilen der Säulen (160, 170) angeordnet sind.

## Revendications

1. Appareil hybride pour le séchage d'air comprimé, comprenant un sécheur à adsorption (300) et un sécheur à base de réfrigération (100), ledit sécheur à adsorption (300) étant situé en aval dudit sécheur à base de réfrigération (100), dans lequel le sécheur à base de réfrigération (100) comprend un dispositif de récupération de chaleur (10), un évaporateur (40) et un dispositif (80, 90) pour séparer et évacuer le condensat contenant un condenseur à air et un séparateur de condensat (80), et dans lequel le sécheur à adsorption (300) comprend un filtre à poussière (240), un filtre déshuileur (110), une première colonne (160) et une seconde colonne (170), dans lequel ladite première colonne (160) et ladite seconde colonne (170) contiennent le matériau adsorbant, et étant inclus dans un circuit de l'air comprimé de sorte à fonctionner alternativement dans le mode d'adsorption et le mode de régénération, et dans lequel l'air comprimé entrant dans le sécheur à adsorption (300) est refroidie à partir du condenseur à air ou du séparateur de condensat (80) après avoir été amené à circuler à travers ledit filtre déshuileur (110), et l'air sortant du séchoir à adsorption (300) reflue dans le dispositif de récupération de chaleur (10) après avoir amené à circuler à travers ledit filtre à poussière (240), **caractérisé en ce que** ladite première colonne (160) et ladite seconde colonne (170) sont reliées par l'intermédiaire d'un conduit (180) muni de deux orifices calibrés (188, 189) ayant la même taille et associés à au moins un chauffage (275) interposé entre lesdits deux orifices calibrés (188, 189) de manière à réduire la différence de débit entre les flux d'air comprimé circulant à travers le conduit (180) respectivement au cours des phases de chauffage et de refroidissement du matériau adsorbant.

2. Appareil hybride pour le séchage d'air comprimé selon la revendication 1, **caractérisé en ce qu'**il est prévu deux sondes de température (Tl et T2) montés à l'intérieur du conduit (180) pour commander le chauffage (275).

3. Appareil hybride pour le séchage d'air comprimé selon l'une quelconque des revendications 1 à 2, comprenant un groupe de soupape (130) adapté pour fournir sélectivement de l'air comprimé pour les colonnes (160, 170) du sécheur à adsorption, **caractérisé en ce qu'**il est prévu au moins une sonde de température (T3) dans un agencement en série avec une soupape (140) et un filtre d'insonorisation (150) pour contrôler à la fois le chauffage et le refroidissement du matériau adsorbant dans les colonnes (160, 170) en se basant sur la température de l'air évacuée à l'extérieur lors de la régénération des colonnes (160, 170).

4. Appareil hybride pour le séchage d'air comprimé selon la revendication 3, **caractérisé en ce qu'**il est prévu deux sondes de température (T3) respectivement situées dans la partie inférieure des colonnes (160, 170).
